# EUROPEAN PATENT APPLICATION

(11) **EP 4 521 516 A1**
(43) Date of publication of application: **12.03.2025**
(21) Application number: 23195430.6
(22) Date of filing: 05.09.2023
(51) Int. Cl.: H01M 10/6556, H01M 10/643, H01M 10/6553, H01M 50/358, H01M 50/367, H01M 50/593, H01M 50/213

(54) **BATTERY CELL FIXTURE WITH COOLING AND DEGASSING AREAS**

(71) Applicant: Röchling Automotive SE, 68165 Mannheim (DE)
(72) Inventor: Ganthaler, Christoph, 21056 Naturno BZ (IT); Dill, Peter, 85051 Ingolstadt (DE)
(74) Representative: Ullrich & Naumann PartG mbB

(57) **Abstract**

A battery cell fixture (114) is disclosed, wherein a plurality of battery cells (112) are supportable by the battery cell fixture (114) in a predefined relative position to each other such that degassing areas (116) of the battery cells (112) are covered by the battery cell fixture (114). The battery cell fixture (114) comprises:
- at least one thermally and electrically isolating sheet element (118);
- at least one fluid guiding channel (122) comprising at least one inner opening (120) and at least one outer opening (124);
- at least one plastic fixture element (126) at least partially enclosing the sheet element (118) and the fluid guiding channel (122), such that the at least one inner opening (120) is arranged at an inner surface (128) of the battery cell fixture (114) and the at least one outer opening (124) is arranged at an outer surface (130) of the battery cell fixture (114).

Further, a method of manufacturing a battery cell fixture (114) and a battery module (110) are disclosed.

## Description

### Technical Field

The invention relates to a battery cell fixture and a method for manufacturing a battery cell fixture. Further, the invention relates to a battery module. The devices and methods according to the present invention may generally be applied in the field of electrical power storage, such as in the field of electrical and/or electrochemical energy storage, e.g. as used in electrically powered entities. Specifically, the invention may be applied in the field of electro mobility, such as in fuel cell, hybrid and/or electric vehicles, e.g. in cars and/or trucks. Other applications however are feasible.

### Background art

Battery cell fixtures are generally used for structuring battery modules and packs and/or for providing stability to batteries within the battery modules and/or battery packs. Typically, battery cell fixtures, battery modules and/or packs comprise safety means for preventing the battery cells from overheating.

Despite the advantages involved, several technical challenges remain. Thus, batteries, especially lithium-ion batteries, typically run the risk of thermal runaway in the event of overheating, i.e. of undergoing an exothermic, self-sustaining decomposition reaction of its cathode and anode. Typically, when a battery cell undergoes thermal runaway, hot gases laden with particles develop that may reach temperatures of more than 1300 °C. This release of thermal energy, if reaching neighboring battery cells, is generally able to also causing a thermal runaway in them, leading to an unwanted chain reaction and typically to fatal destruction of the entire battery module and/or even the whole battery pack. These gases are typically combustible electrolyte and decomposition gases of the battery material, such as CO₂, CO, H₂, short chain hydrocarbons, like CH4, and electrolyte vapours, like DEC, DMC, and thus are potentially leading to fires and even explosions.

### Problem to be solved

It is therefore desirable to provide devices and methods, which address the above-mentioned shortcomings of known devices and methods. Specifically, a battery cell fixture, a method for manufacturing a battery cell fixture and a battery module shall be proposed, which limit or even prevent the release of damaging gases developed by a thermal runaway. Specifically, devices and methods shall be proposed, which reduce or even inhibit considerable damage to the battery's surrounding in the event of a thermal runaway.

### Summary

This problem is addressed by a battery cell fixture, a method of manufacturing a battery cell and a battery module with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a battery cell fixture is proposed, wherein a plurality of battery cells are supportable by the battery cell fixture in a predefined relative position to each other, such that degassing areas of the battery cells are covered by the battery cell fixture. The battery cell fixture comprises at least one thermally and electrically isolating sheet element. Further, the battery cell fixture comprises at least one fluid guiding channel, preferably a plurality of fluid guiding channels, comprising at least one inner opening, i.e. an inlet opening, and at least one outer opening, i.e. an outlet opening. Further, the battery cell fixture comprises at least one plastic fixture element at least partially enclosing the sheet element and the fluid guiding channel, such that the at least one inner opening is arranged at an inner surface of the battery cell fixture, i.e. facing towards at least one of the degassing areas of the battery cells, and the at least one outer opening is arranged at an outer surface of the battery cell fixture.

The term "battery cell fixture" as used herein is a broad term and is to be given its ordinary and customary meaning to a person of ordinary skill in the art and is not to be limited to a special or customized meaning. The term specifically may refer, without limitation, to an element and/or object configured for providing structure and/or stability to one or more batteries, particularly in a battery pack and/or in a battery module. The battery cell fixture may specifically be configured for supporting and/or holding, e.g. mechanically fixating, a plurality of batteries within its fixture structure, e.g. by at least partially encircling and/or enclosing the batteries. The battery cell fixture may be a carrier for the plurality of batteries, holding them in a predefined relative position to each other and covering their degassing areas.

The term "degassing area" as used with regard to battery cells herein is a broad term and is to be given its ordinary and customary meaning to a person of ordinary skill in the art and is not to be limited to a special or customized meaning. The term specifically may refer, without limitation, to an area and/or spot on the enclosure of the battery cell itself, such as on a housing and/or wrap of the batteries' anode and cathode, that is a defined weak spot, configured to rip open or burst in case a pressure within the battery cell rises above a predefined threshold level. Specifically, the degassing area of the battery cell may comprise a material that rips and/or tears open, when subjected to a pressure higher than the threshold level. Other configurations, for example by one or more valves, are possible.

In particular, the sheet element may be arranged such as to cover the degassing area of each of the battery cells, such that, in case of a thermal runaway event, the sheet element may act as a barrier for the fluid passing through the degassing area.

The term "sheet element" as used herein is a broad term and is to be given its ordinary and customary meaning to a person of ordinary skill in the art and is not to be limited to a special or customized meaning. The term specifically may refer, without limitation, to an object having a flat, spread-out and/or sheet-like shape and a thickness, wherein an extension of the object in at least one lateral dimension, specifically in two lateral dimensions, exceeds the thickness of the object, such as by at least a factor of 2, preferably by at least a factor of 5, more preferably by at least a factor of 10 and even more preferably by at least a factor of 20 or even at least a factor of 30. In particular, the sheet element may have a thermally and electrically isolating characteristic, such as an electrical and thermal insulator. Specifically, the sheet element may comprise an electrically and thermally insulating material, such as to prevent short circuits and heat transfer and/or heat exchange through the sheet element, i.e. to avoid unwanted currents between electrically conducting elements and further to avoid heat transfer. As an example, the sheet element may be or may comprise at least one material having a thermal conductivity κ in the range of 0 < κ ≤ 0.4 W/(mK). Additionally or alternatively, the sheet element may be or may comprise at least one material having an electrical conductivity γ in the range of 0 < γ ≤ 10⁻⁶ S/m.

The sheet element is at least partially enclosed by the plastic fixture element. The term "plastic fixture element" as used herein is a broad term and is to be given its ordinary and customary meaning to a person of ordinary skill in the art and is not to be limited to a special or customized meaning. The term specifically may refer, without limitation, to an arbitrary object comprising polymeric material and being configured for holding and/or supporting, in at least one dimension, another object. In particular, the plastic fixture element may be or may comprise at least one rigid mechanical structure and/or holder generated by a molding process. As an example, the plastic fixture element may comprise at least one polymeric material.

The plastic fixture element may at least partially enclose the batteries, thereby forming at least one battery receiving space, such as an interior space of the battery cell fixture in which the battery cells may be supported and/or held. Thus, the plastic fixture element may be or may comprise at least one inner surface facing the batteries, i.e. limiting and/or confining the interior space, and at least one outer surface facing an environment and/or ambient space of the battery cell fixture.

The terms "fluid guiding channel" and/or "flow guiding channel" as used herein is a broad term and is to be given its ordinary and customary meaning to a person of ordinary skill in the art and is not to be limited to a special or customized meaning. The term specifically may refer, without limitation, to a pipe and/or tube having an arbitrarily shaped, closed cross section and may be configured for guiding the fluid, i.e. providing a flow direction for the fluid. Thus, the fluid guiding channel may comprise at least two openings, one through which the fluid may enter the fluid guiding channel, e.g. an inner opening, and one through which the fluid may exit the fluid guiding channel, i.e. an outer opening. The fluid guiding channel may specifically be or may comprise at least one wall, such as an enclosing wall, for continuously enclosing an interior space through which the fluid may flow from an inner opening to an outer opening. The fluid guiding channel may also referred to as flow guiding channel. In particular, the terms fluid guiding channel and flow guiding channel may be used interchangeably and may refer to the same entity and/or element.

As used herein, the terms "inner opening" and "outer opening" may refer to the location and function of the opening of the fluid guiding channel in the battery cell fixture. In particular, the term "inner opening" may refer to an opening of the fluid guiding channel through which the fluid may enter the fluid guiding channel, wherein the inner opening may be arranged such as to face a side of the battery cell fixture on which the battery cells are supportable and/or holdable, such as facing the interior space of the battery cell fixture. Thus, the inner opening may face towards the battery receiving space of the battery cell fixture and may be or may comprise an opening arranged in the inner surface of the plastic fixture element, such as an inlet for the fluid, i.e. from at least one of the battery cells, into the fluid guiding channel. In particular, the inner opening may be covered by the sheet element, such that only fluid, which has passed through the sheet element may be able to enter the fluid guiding channel.

The term "outer opening" may refer to an opening of the fluid guiding channel through which the fluid may exit the fluid guiding channel, facing a side of the battery cell fixture facing away from the battery cells, such as an exterior of the battery cell fixture. Thus, the outer opening may face towards an exterior of the battery cell fixture and may be or may comprise an opening arranged in the outer surface of the plastic fixture element, such as an outlet for the fluid from the fluid guiding channel to the environment and/or ambient space of the battery cell fixture.

The term "fluid" as used herein is a broad term and is to be given its ordinary and customary meaning to a person of ordinary skill in the art and is not to be limited to a special or customized meaning. The term specifically may refer, without limitation, to a gas developed in a thermal runway of a battery, such as a hot gas, for example a hot gas laden with particles. The fluid may in particular be a decomposition gas of battery material and may for example comprise one or more of CO₂, CO, H₂, short chain hydrocarbons, like CH4, and electrolyte vapours, like DEC, DMC. As an example, the fluid may have a temperature in the range of from 100°C to 1400°C, specifically from 500°C to 1350°C, more specifically from 700°C to 1300°C.

In particular, the plastic fixture element may be generated by at least partially overmolding the sheet element and the fluid guiding channel. Thus, the plastic fixture element may be generated in an overmolding process. As used herein, the term "overmolding" may specifically, without limitation, refer to a process of shaping and/or casting a pliable material at least partially around an insert or inlay, e.g. around the at least one sheet element and around the at least one fluid guiding channel, i.e. as inserts. In particular, the overmolding may refer to a process of first shaping and/or forming the polymeric material while in a liquid and/or pliable state, e.g.at least partially around the sheet element and the fluid guiding channel, by using a mold and/or matrix and then hardening and/or setting the polymeric material.

The plastic fixture element may fully enclose the sheet element in at least one plane. Specifically, the plastic fixture element may be generated by overmolding the sheet element, such that the sheet element may be fully enclosed in at least one dimension and/or plane by the plastic fixture element.

The sheet element may specifically be arranged parallel to the inner surface of the battery cell fixture. In particular, the sheet element may be arranged and/or orientated such that an angle α between its flat and/or spread-out extension and the inner surface of the battery cell fixture is ≤ 10°, specifically α ≤ 5°.

The sheet element may specifically comprise at least one of a mica material, i.e. a mica strip or a mica plate; a mineral, such as a mineral fiber; a silicone rubber; and a ceramic material. Thus, as an example, the sheet element may be or may comprise a mineral, such as a mineral fiber. Additionally or alternatively, the sheet element may be or may comprise one or more of a silicone rubber and a ceramic material. Further additionally or alternatively, the sheet element may be or may comprise a mica material, such as a mica strip and/or a mica plate. In particular, the mica material, such as the mica strip and/or the mica plate, may comprise at least one material selected from the group consisting of: Muscovite and Phlogopite.

The plastic fixture element may enclose the fluid guiding channel in at least one plane. Preferably, the plastic fixture element may enclose the fluid guiding channel in at least two orthogonal planes. Thus, the plastic fixture element may be generated by overmolding the fluid guiding channel, such that the fluid guiding channel may be fully enclosed in at least one dimension and/or plane, e.g. in two orthogonal planes, by the plastic fixture element.

The fluid guiding channel may for example comprise at least one meandering part configured for collecting particles from a fluid passing through the fluid guiding channel, i.e. particles which are dispersed in the fluid. The term "meandering part" as used herein may specifically, without limitation, refer to a section of the fluid guiding channel forcing a change in flow direction of the fluid flowing through the fluid guiding channel. In particular, the meandering part may be or may comprise a curve and/or corner in the fluid guiding channel having an angle β ≤ 120°, specifically β ≤ 90°, more specifically β ≤ 60°. In particular, the meandering part may be configured for, for example using an inertia effect, collect particles from the fluid flowing and/or passing through the fluid guiding channel, e.g. thereby separating and/or filtering the particles from the fluid.

The fluid guiding channel may comprise a lining, such as a liner, configured for at least partially lining the interior space of the fluid guiding channel. The lining of the fluid guiding channel may comprise at least one lining material selected from the group consisting of: mica, mineral fiber, silicone rubber, ceramic material, organosheet, and glass-reinforced plastic (GFK).

The battery cell fixture may specifically comprise a plurality of fluid guiding channels. Specifically, the battery cell fixture may comprise a plurality of fluid guiding channels in form of a fluid guiding labyrinth. As an example, the fluid guiding labyrinth may be configured for one or more of separating particles from the fluid and cooling the fluid. For example, the at least one meandering part may be part of the fluid guiding labyrinth.

Additionally or alternatively, the plurality of fluid guiding channels may comprise a plurality of inner openings and one outer opening. Thus, as an example, the fluid guiding channels may be interconnected such that the fluid may enter the fluid guiding channels through a plurality of inner openings and may collectively guide the fluid towards and through only one outer opening.

The plastic fixture element may comprise at least one material selected from the group consisting of: a plastic material; a thermoplastic material, such as polypropylene (PP) and/or polyamide (PA); long fiber reinforced thermoplastics; polycarbonate (PC); polycarbonate and acrylonitrile butadiene styrene (PC-ABS); a thermosetting material; and an elastomer.

The plastic fixture element may comprise at least two material components, such as one or more of a two-component material and a three-component material, for example a multi-component material. Thus, the plastic fixture element may comprise more than one plastic material component. As an example, the two-component material may be selected from the group consisting of: a thermoplastic material and an elastomer. In particular, a weight of a hard component may be higher than a weight of an elastic component. Thus, as an example, the plastic fixture element may comprise at least two material components, wherein a first material component is the hard component and a second material component is the elastic component.

The battery cells, specifically the battery cells supportable by and/or in the battery cell fixture in a predefined relative position to each other, may be selected from the group consisting of: a cylindrical battery cell, a prismatic battery cell and a pouch battery cell.

In a further aspect of the present invention, a method for manufacturing a battery cell fixture is proposed, in particular a battery cell fixture as disclosed herein. The method comprises the following steps, which may be performed in the given order. Still, a different order is possible. The method may comprise additional steps, which are not mentioned. It is further possible to perform one, more than one or all of the method steps repeatedly. Further, two or more of the method steps may be performed simultaneously or in a timely overlapping fashion.

The method comprises the following steps:
a) providing the at least one sheet element and the at least one fluid guiding channel;
b) generating the at least one plastic fixture element by at least partially overmolding the at least one sheet element and the at least one fluid guiding channel in at least one overmolding process.

In particular, the method is configured for manufacturing the battery cell fixture as described above or as further outlined below. Thus, for possible definitions and options, reference may be made to the description of the battery cell fixture as disclosed herein.

In yet a further aspect of the present invention, a battery module is proposed. The battery module comprises a plurality of battery cells and at least one battery cell fixture as described herein. Thus, for possible definitions and options, reference may be made to the description of the battery cell frame as described above or as further outlined below. In the battery module, the plurality of battery cells are supported by the at least one battery cell fixture, such that degassing areas of the battery cells are covered by the battery cell fixture, wherein the at least one inner opening of the fluid guiding channel faces towards at least one of the battery cells supported in the battery cell fixture.

The term "battery module" as used herein is a broad term and is to be given its ordinary and customary meaning to a person of ordinary skill in the art and is not to be limited to a special or customized meaning. The term specifically may refer, without limitation, to an assembly of multiple battery cells, specifically of a predefined number of battery cells, combined into at least one battery cell fixture. In particular, the battery module may be a battery cell protecting installable entity.

Specifically, in the battery module, the battery cell fixture may be arranged such that the at least one sheet element covers the degassing area of at least one battery cell. In particular, the number of sheet elements may correspond to a number of battery cells, such that each of the degassing areas of the battery cells is covered by exactly one sheet element.

The proposed devices and methods provide a large number of advantages over known devices and methods of similar kind. In particular, the devices and methods according to the present application may allow for a more efficient cooling of the battery cells in case of a thermal runaway event. Specifically, the purging and/or exhausting of the fluid, such as of the hot gas developing during a thermal runaway form the battery cell, may reduce heat accumulation and thereby reduce the risk of a chain reaction of thermal runaway events in neighboring battery cells.

Further, the proposed devices and methods may increase battery safety by reducing the risk of fire and/or explosion in case of a thermal runaway. In particular, fire and/or explosion may be prevented by the sheet element hindering the fluid and its particles from uncontrolled spreading. In particular, the sheet element, by acting as a barrier for the fluid developed in the thermal runaway event, may efficiently reduce fire propagation. Further, the separation of particles from the hot gas of the fluid, e.g. by the sheet element and optionally additionally by the one or more fluid guiding channels, may additionally reduce the risk of the battery module catching fire and/or exploding.

Furthermore, the proposed devices and methods may allow for a more cost efficient production than known devices and methods. Specifically, by needing very little installation space, the proposed devices and methods may reduce an overall size of the battery module, reducing the costs for material and transport. In particular, the proposed arrangement of the sheet element and the fluid guiding channels in the battery cell fixture may allow integrating multiple functions into one part, thereby not only reducing installation space, but also decreasing the number of parts to be assembled, allowing for a more cost efficient assembly of the battery module.

Summarizing and without excluding further possible embodiments, the following embodiments may be envisaged:
Embodiment 1: A battery cell fixture, wherein a plurality of battery cells are supportable by the battery cell fixture in a predefined relative position to each other, such that degassing areas of the battery cells are covered by the battery cell fixture, the battery cell fixture comprising:
   - at least one thermally and electrically isolating sheet element;
   - at least one fluid guiding channel, preferably a plurality of fluid guiding channels, comprising at least one inner opening, i.e. an inlet opening, and at least one outer opening, i.e. an outlet opening;
   - at least one plastic fixture element at least partially enclosing the sheet element and the fluid guiding channel, such that the at least one inner opening is arranged at an inner surface of the battery cell fixture, i.e. facing towards at least one of the degassing areas of the battery cells, and the at least one outer opening is arranged at an outer surface of the battery cell fixture.
Embodiment 2: The battery cell fixture according to the preceding embodiment, wherein the plastic fixture element is generated by at least partially overmolding the sheet element and the fluid guiding channel.
Embodiment 3: The battery cell fixture according to any one of the preceding embodiments, wherein the plastic fixture element fully encloses the sheet element in at least one plane.
Embodiment 4: The battery cell fixture according to any one of the preceding embodiments, wherein the sheet element is arranged parallel to the inner surface of the battery cell fixture.
Embodiment 5: The battery cell fixture according to any one of the preceding embodiments, wherein the sheet element comprises at least one of a mica material, i.e. a mica strip or a mica plate; a mineral, such as a mineral fiber; a silicone rubber; and a ceramic material.
Embodiment 6: The battery cell fixture according to the preceding embodiment, wherein the mica material, such as the mica strip and/or the mica material, comprises at least one material selected from the group consisting of: Muscovite and Phlogopite.
Embodiment 7: The battery cell fixture according to any one of the preceding embodiments, wherein the plastic fixture element encloses the fluid guiding channel in at least one plane, preferably in at least two orthogonal planes.
Embodiment 8: The battery cell fixture according to any one of the preceding embodiments, wherein the fluid guiding channel comprises at least one meandering part configured for collecting particles from a fluid passing through the fluid guiding channel, i.e. particles which are dispersed in the fluid.
Embodiment 9: The battery cell fixture according to any one of the preceding embodiments, wherein a lining of the fluid guiding channel comprises at least one lining material selected from the group consisting of: mica, mineral fiber, silicone rubber, ceramic material, organosheet, and glass-reinforced plastic (GFK).
Embodiment 10: The battery cell fixture according to any one of the preceding embodiments, wherein the battery cell fixture comprises a plurality of fluid guiding channels in form of a fluid guiding labyrinth.
Embodiment 11: The battery cell fixture according to the preceding embodiment, wherein the plurality of fluid guiding channels comprise a plurality of inner openings and one outer opening.
Embodiment 12: The battery cell fixture according to any one of the preceding embodiments, wherein the plastic fixture element comprises at least one material selected from the group consisting of: a plastic material; a thermoplastic material, such as polypropylene (PP) and/or polyamide (PA); long fiber reinforced thermoplastics; polycarbonate (PC); polycarbonate and acrylonitrile butadiene styrene (PC-ABS); a thermosetting material; and an elastomer.
Embodiment 13: The battery cell fixture according to any one of the preceding embodiments, wherein the plastic fixture element comprises at least two material components, such as one or more of a two-component material and a three-component material, for example a multi-component material.
Embodiment 14: The battery cell fixture according to the preceding embodiment, wherein the two-component material is selected from the group consisting of: a thermoplastic material and an elastomer.
Embodiment 15: The battery cell fixture according to any one of the preceding embodiments, wherein the battery cells are selected from the group consisting of: a cylindrical battery cell, a prismatic battery cell, a pouch battery cell.
Embodiment 16: A method of manufacturing a battery cell fixture according to any one of the preceding embodiments, comprising
   a) providing the at least one sheet element and the at least one fluid guiding channel;
   b) generating the at least one plastic fixture element by at least partially overmolding the at least one sheet element and the at least one fluid guiding channel in at least one overmolding process.
Embodiment 17: A battery module comprising a plurality of battery cells and at least one battery cell fixture according to any one of the preceding embodiments referring to a battery cell fixture, wherein the plurality of battery cells are supported by the at least one battery cell fixture, such that degassing areas of the battery cells are covered by the battery cell fixture, wherein the at least one inner opening of the fluid guiding channel faces towards at least one of the battery cells supported in the battery cell fixture.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a battery module with an embodiment of a battery cell fixture in a perspective view;
- Figure 2: shows an embodiment of a battery cell fixture in a top plane view;
- Figure 3: shows an embodiment of a battery cell fixture in a perspective view;
- Figure 4: shows an embodiment of a battery cell fixture in a side view; and
- Figure 5: shows a flow chart of a method for manufacturing a battery cell fixture.

### Detailed description of the embodiments

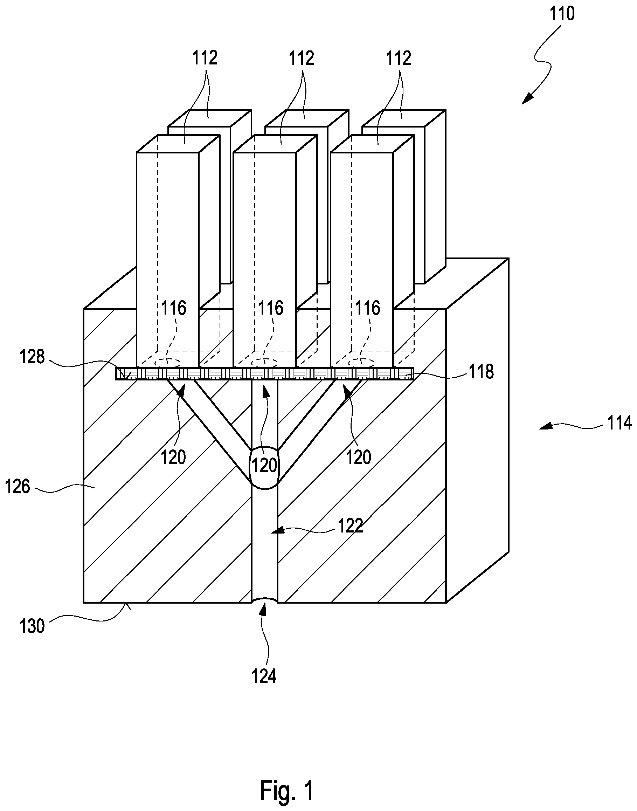

In Figure 1, an embodiment of a battery module 110 is illustrated in a perspective view, the battery module 110 comprising a plurality of battery cells 112 and an embodiment of a battery cell fixture 114. In the battery module 110, the plurality of battery cells 112 are supported by the battery cell fixture 114, such that degassing areas 116 of the battery cells 112 are covered by the battery cell fixture 114, specifically by a thermally and electrically isolating sheet element 118 of the battery cell fixture 114, wherein at least one inner opening 120 of a fluid guiding channel 122 of the battery cell fixture 114 faces towards at least one of the battery cells 112 supported in the battery cell fixture 114.

The battery cell fixture 114 in which a plurality of the battery cells 112 are supportable in a predefined relative position to each other such that the degassing areas 116 are covered, comprises the at least one thermally and electrically isolating sheet element 118. Further, the battery cell fixture 114 comprises the at least one fluid guiding channel 122 comprising the at least one inner opening 120 and at least one outer opening 124. Furthermore, the battery cell fixture 114 comprises at least one plastic fixture element 126 at least partially enclosing the sheet element 118 and the fluid guiding channel 122, such that the at least one inner opening 120 is arranged at an inner surface 128 of the battery cell fixture 114, i.e. facing towards at least one of the degassing areas 116 of the battery cells 112, and the at least one outer opening 124 is arranged at an outer surface 130 of the battery cell fixture 114. As an example, the battery cell fixture 114 may comprise a plurality of fluid guiding channels 122 comprising a plurality of inner openings 120 and only one common and shared outer opening 124.

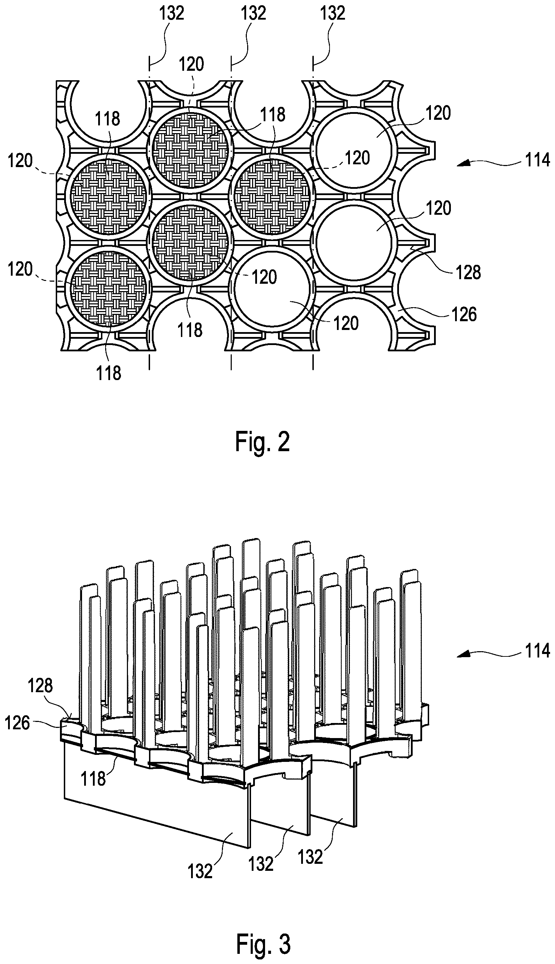

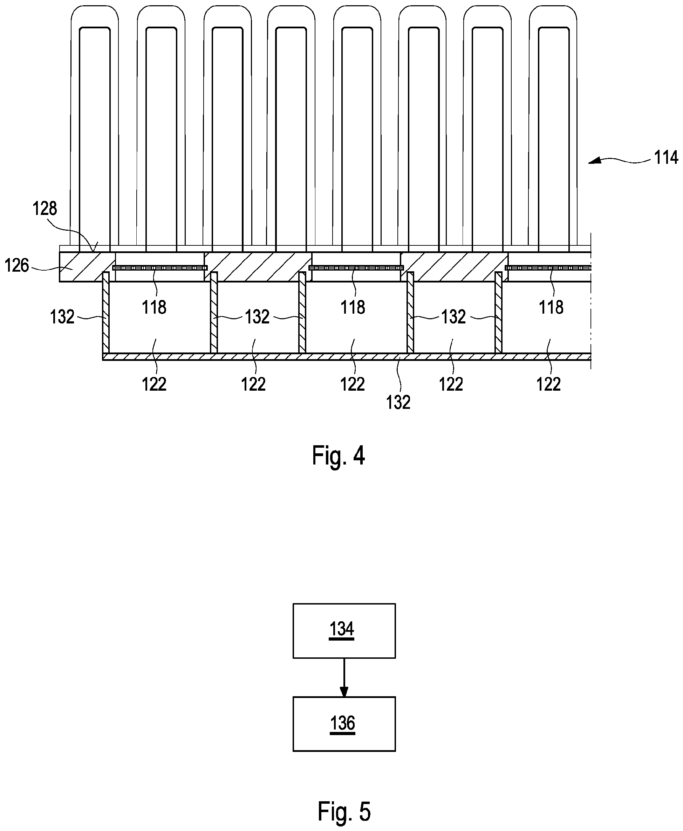

Figures 2 to 4 illustrate different embodiments of the battery cell fixture 114 in a top plane view (Figure 2), in a perspective view (Figure 3) and in a side view (Figure 4). As an example, the plastic fixture element 126 may be generated by at least partially overmolding the sheet element 118 and the fluid guiding channel 122, wherein one or both of the sheet element 118 and the fluid guiding channel 122 may in at least one plane be fully enclosed by the plastic fixture element 126. In particular, the at least one fluid guiding channel 122 may be or may comprise at least one wall 132 for enclosing an interior space of the fluid guiding channel 122 through which the fluid may flow from the inner opening 120 to the outer opening 124. As exemplarily illustrated in Figures 3 and 4, neighboring fluid guiding channels 122 may share one wall 132, e.g. the wall 132 may be configured for separating two neighboring fluid guiding channels 122. Thus, as exemplarily illustrated in Figure 4, an interior space of each of the fluid guiding channels 122 may be enclosed by at least three walls 132, wherein some of the walls 132 may function as a boundary for two neighboring fluid guiding channels 122.

The at least one sheet element 118 may specifically be arranged parallel to the inner surface 128 of the battery cell fixture 114 and may further cover the inner opening 120 of the fluid guiding channel 122. In particular, the sheet element 118 may be configured to act as a barrier between the degassing area 116 of the battery cell 112 and the fluid guiding channel 122.

Figure 5 illustrates a flow chart of a method for manufacturing a battery cell fixture 114. The method comprises the following steps:
a) (denoted by reference number 134) providing the at least one sheet element 118 and the at least one fluid guiding channel 122;
b) (denoted by reference number 136) generating the at least one plastic fixture element 126 by at least partially overmolding the at least one sheet element 118 and the at least one fluid guiding channel 122 in at least one overmolding process.

### List of reference numbers

- 110: battery module
- 112: battery cell
- 114: battery cell fixture
- 116: degassing area
- 118: sheet element
- 120: inner opening
- 122: fluid guiding channel
- 124: outer opening
- 126: plastic fixture element
- 128: inner surface
- 130: outer surface
- 132: wall
- 134: step a)
- 136: step b)

## Claims

1. A battery cell fixture (114), wherein a plurality of battery cells (112) are supportable by the battery cell fixture (114) in a predefined relative position to each other such that degassing areas (116) of the battery cells (112) are covered by the battery cell fixture (114), the battery cell fixture (114) comprising:
- at least one thermally and electrically isolating sheet element (118);
- at least one fluid guiding channel (122) comprising at least one inner opening (120) and at least one outer opening (124);
- at least one plastic fixture element (126) at least partially enclosing the sheet element (118) and the fluid guiding channel (122), such that the at least one inner opening (120) is arranged at an inner surface (128) of the battery cell fixture (114) and the at least one outer opening (124) is arranged at an outer surface (130) of the battery cell fixture (114).

2. The battery cell fixture (114) according to the preceding claim, wherein the plastic fixture element (126) is generated by at least partially overmolding the sheet element (118) and the fluid guiding channel (122).

3. The battery cell fixture (114) according to any one of the preceding claims, wherein the plastic fixture element (126) fully encloses the sheet element (118) in at least one plane.

4. The battery cell fixture (114) according to any one of the preceding claims, wherein the sheet element (118) is arranged parallel to the inner surface (128) of the battery cell fixture (114).

5. The battery cell fixture (114) according to any one of the preceding claims, wherein the sheet element (118) comprises at least one of a mica material; a mineral; a silicone rubber; a ceramic material, wherein the mica material comprises at least one material selected from the group consisting of: Muscovite, Phlogopite.

6. The battery cell fixture (114) according to any one of the preceding claims, wherein the plastic fixture element (126) encloses the fluid guiding channel (122) in at least one plane.

7. The battery cell fixture (114) according to any one of the preceding claims, wherein the fluid guiding channel (122) comprises at least one meandering part configured for collecting particles from a fluid passing through the fluid guiding channel (122).

8. The battery cell fixture (114) according to any one of the preceding claims, wherein a lining of the fluid guiding channel (122) comprises at least one lining material selected from the group consisting of: mica, mineral fiber, silicone rubber, ceramic material, organosheet, and glass-reinforced plastic (GFK).

9. The battery cell fixture (114) according to any one of the preceding claims, wherein the battery cell fixture (114) comprises a plurality of fluid guiding channels (122) in form of a fluid guiding labyrinth.

10. The battery cell fixture (114) according to the preceding claim, wherein the plurality of fluid guiding channels (122) comprise a plurality of inner openings (120) and one outer opening (124).

11. The battery cell fixture (114) according to any one of the preceding claims, wherein the plastic fixture element (126) comprises at least one material selected from the group consisting of: a plastic material; a thermoplastic material, such as polypropylene (PP) and/or polyamide (PA); long fiber reinforced thermoplastics; polycarbonate (PC); polycarbonate and acrylonitrile butadiene styrene (PC-ABS); a thermosetting material; and an elastomer.

12. The battery cell fixture (114) according to any one of the preceding claims, wherein the plastic fixture element (126) comprises at least two material components.

13. The battery cell fixture (114) according to the preceding claim, wherein the two-component material is selected from the group consisting of: a thermoplastic material; an elastomer.

14. A method of manufacturing a battery cell fixture (114) according to any one of the preceding claims, comprising
a) providing the at least one sheet element (118) and the at least one fluid guiding channel (122);
b) generating the at least one plastic fixture element (126) by at least partially overmolding the at least one sheet element (118) and the at least one fluid guiding channel (122) in at least one overmolding process.

15. A battery module (110) comprising a plurality of battery cells (112) and at least one battery cell fixture (114) according to any one of the preceding claims referring to a battery cell fixture (114), wherein the plurality of battery cells (112) are supported by the at least one battery cell fixture (114), such that degassing areas (116) of the battery cells (112) are covered by the battery cell fixture (114), wherein the at least one inner opening (120) of the fluid guiding channel (122) faces towards at least one of the battery cells (112) supported in the battery cell fixture (114).
